Europäisches Patentamt

European Patent Office

Office européen des brevets

(11) Publication number: **0 440 797 A1**

## EUROPEAN PATENT APPLICATION
### published in accordance with Art. 158(3) EPC

(21) Application number: 89911891.3

(51) Int. Cl.5: **A61B 6/03**

(22) Date of filing: 31.10.89

(86) International application number:
**PCT/JP89/01129**

(87) International publication number:
**WO 90/04944 (17.05.90 90/11)**

(30) Priority: 31.10.88 JP 274986/88

(43) Date of publication of application:
**14.08.91 Bulletin 91/33**

(84) Designated Contracting States:
**DE FR GB NL**

(71) Applicant: YOKOGAWA MEDICAL SYSTEMS, LTD
7-127, Ashigaoka 4-chome
Hino-shi, Tokyo 191(JP)

(72) Inventor: NAGAI, Hideo Yokogawa Medical Systems, Ltd.
7-127, Asahigaoka 4-chome Hino-shi
Tokyo 191(JP)

(74) Representative: Henkel, Feiler, Hänzel & Partner
Möhlstrasse 37
W-8000 München 80(DE)

(54) **PICTURE PROCESSING METHOD AND APPARATUS.**

(57) A picture processing method which vividly discriminates streaky false images that are caused by many factors and that seriously hinder the diagnosis, which effectively decreases the false image, and which further decreases the corresponding streaks in the X-ray CT's, and an apparatus thereof. To solve the above-mentioned assignments, the picture processing method and apparatus of the present invention discriminate images to determine the presence of false images in the form of streaks, straight lines, or a combination of lines, and decrease the streaks to decrease false image, characterized in that part or whole of the two-dimensional image is picked up, projection data of all directions or of a given direction are found by calculation from these data, the streaky false image is discriminated by comparison with the projection data, and data are formed based upon the results of comparison to remove streaky false image.

## FIG. 1

DS1
DATA MEMORY
UNIT

DS4
DATA MEMORY
UNIT

DS7
DATA MEMORY
UNIT

DS3
DATA MEMORY
UNIT

PPR
PREPROCESSING
UNIT

RECON
IMAGE RECON-
STRUCTION UNIT

SIMAG
IMAGE REDUCTION
PROCESSING UNIT

PKUP
IMAGE DATA PICK-
UP PROCESSING
UNIT

PRJ
PROJECTION DATA
PRODUCING UNIT

DET
FORM IDENTIFYING
UNIT

APRJ

STREAK FALSE IMAGE
COMPONENT PRODUCING
UNIT

DS2
DATA MEMORY
UNIT

DS5
DATA MEMORY
UNIT

DS6
DATA MEMORY
UNIT

DPS IMAGE PROCESSING UNIT

→ FLOW OF DATA
→ FLOW OF CONTROL

Field of Invention

The present invention relates to an image processing method and apparatus therefor to identify from an image the presence of a streak-like false image in streaks, lines and fan forms synthesized lineally and to reduce streak and the like in order to reduce such false images.

Background Art

In tomographic images, especially basal images by an X-ray computerized tomograph (referred to as X-ray CT hereinafter), due to the partial volume effect of bone and the like, there develop false images in streaks, lines and forms synthesized lineally ie. fan forms and the like (referred to as streak-like false images). These bring about severe detrimental effects on diagnosis, but they have been current problems the occurrence of which is unavoidable in X-ray CT and X-ray measuring methods.

As is well known in X-ray CT, an object body is exposed to all-directional X ray from an X-ray source, and the X ray transmitted through the object body is then detected with a detector, which data is image reconstructed to display an image. As the projection data to be actually measured for image reconstruction (referred to also as projected data or projection data; simply referred to as projection data hereinbelow), projection data detected and measured offset is used due to the requirements of higher resolution and a lower rate of false images in identical geometry of a measuring system.

There will now be explained the measurement and acquisition of sample data according to 1/4-1/4 offset method as a typical offset detection measuring method. According to the sample data acquisition method, in the case of using a third-generation X-ray CT for collecting sample data in multiple directions by rotating, around an object body, an X-ray source and a multichannel analyzer, the two facing each other through the object body, a detector is positioned to acquire data so that X ray from the X-ray source, passing through the rotation center thereof and irradiating the center channel of the multichannel detector, may be incident to a point by the channel interval ie. one-fourth of the sample interval, distant from the channel center.

A projection data set thus obtained in multiple directions, each data having inverse projecting directions in parallel beams, has the X-ray paths sifting by half of a channel interval ie. a sample interval, and the combination of data sets having such relation realizes the image reconstruction based on the data equivalent to those obtained with half of a channel interval, ie. a sample interval, of a detector, to generate an image with high spatial resolution and less false images.

It is well known that in X-ray CT, there occur streak-like false images due to various causes, which images severely disturb image diagnosis. The identification and reduction of such streak-like false images is effected by producing projection data detected offset.

Projection and offset detection will now be explained hereinbelow.

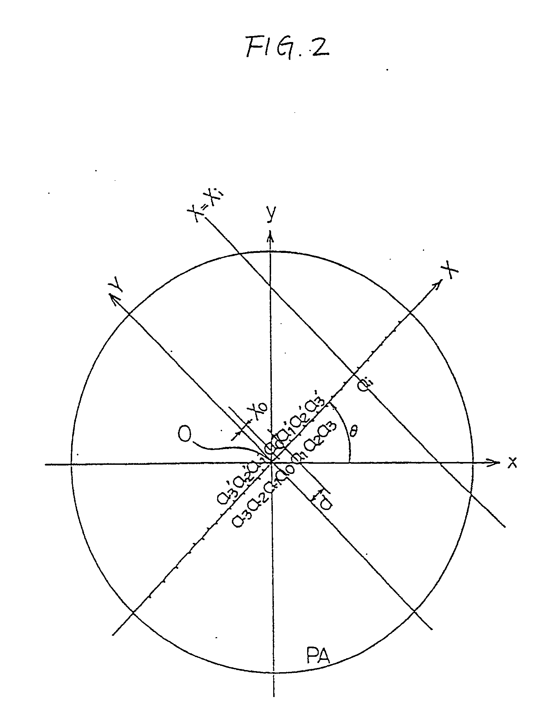

In Fig.2, xy is rectangular coordinate and XY is coordinate obtained by rotating xy coordinate by $\theta$ - (counterclockwise direction $\theta > 0$ ). In relation to the spatial distribution $\mu$ (x, y) of physical quantities such as X-ray absorption coefficient and the like, the following linear integral a $(X,\theta)$ on line $X = X$ on XY coordinate is referred to as projection data.

$a(X,\theta)$

$$= \int_X \mu(x,y)dY$$
$$= \int_X \mu(X \cdot \cos\theta - Y \cdot \sin\theta, X \cdot \sin\theta + Y \cdot \cos\theta)dY \quad (0)$$

In the figure, 0 is the origin of xy and XY coordinates. When the measurement or calculation of projection data is to be carried out at a discrete point on XY coordinate, the projection data set at point $i \cdot d$ ($i = 0, \pm 1, \pm 2, ....$; d is a sample interval) on X coordinate is as follows;

$$\{a(X_1,\theta) \equiv a(i \cdot d,\theta) \equiv a_1; \; i = 0, \pm 1, \pm 2, ...\}$$

That is, the measuring points (calculating points) of projection data in this case correspond to integral points with unit d on X coordinate.

Alternatively, the projection data set at $i \cdot d + X_0$ ($i = 0, \pm 1, \pm 2, ....$; X is a constant) on X coordinate is as follows;

$$\{a(X_1',\theta)$$
$$\equiv a(i \cdot d + X_0,\theta)$$
$$\equiv a_1'; \; i = 0, \pm 1, \pm 2, ...\}$$

That is, the measuring points (calculating points) of projection data in this case correspond to points sifting by X from each integral point having unit d on X coordinate. That is, the latter is a data set, detected offset by X in X direction in relation to the former.

It is well known that due to the so-called partial volume effect there occur streak-like false images in a reconstructed X-ray CT image of a region with drastic change of forms of bone such as those in base, which has been considered an unavoidable problem in X-ray CT. It is also well known that there occur streak-like false images due to various other reasons such as X-ray beam hardening and movement of an object body including biological subjects, and it has been expected to rapidly identify and exclude and reduce these streak-like or linear false images.

Disclosure of the Invention

The present invention has been carried out on the basis of the problem described above, and its object is to clearly identify streak-like false images developing due to various reasons and proposing severe disadvantages on diagnosis and to propose a method to effectively reduce such false images so that there may be correspondingly realized an image processing method and apparatus therefor to decrease streak and the like in X-ray CT.

In the image processing method and apparatus therefor to identify from images the presence of false images, in streaks, lines or forms synthesized lineally and to reduce streak and the like, the present invention to solve the aforementioned problems is characterized by extracting a part or the entire part of a two-dimensional image, calculating and determining projection data in each direction or in an appropriate direction from these data, identifying the streak-like false images with comparison of the projection data aforementioned and producing the data to exclude the streak-like images on the basis of the comparative results.

Brief Description of Drawings

Fig.1 is a block diagram of an embodiment of the present invention;

Fig.2 is an explanatory figure of projection data and offset detection;

Fig.3 is a block diagram of an embodiment of the apparatus of producing projection data in case of carrying out projection calculation by Fourier transform;

Figs.4A and 4B are figures of real image data and image data from Fourier transform;

Figs.5A to 5C are figures depicting concrete examples of data extraction;

Figs.6A and 6B are explanatory figures, regarding the relation in the frequency space between the components on rectangular coordinate and those on polar coordinate, and the projection in the real space;

Fig.7 is a figure of projection by direct calculating method;

Fig.8 is a flow chart of the operation of the embodiment in Fig.1;

Fig.9 is a block diagram of an application embodiment of the present invention;

Fig.10 is a flow chart of the operation of the application embodiment in Fig.9;

Fig. 11 is a block diagram of another application embodiment of the present invention;

Fig.12 is a flow chart of the operation of an application embodiment in Fig.11;

Fig.13 is a flow chart of another operation concerning the apparatus of the application embodiment in Fig.11.

Best mode of carrying out the Invention

There will now be explained in detail the embodiments of the present invention with reference to drawings.

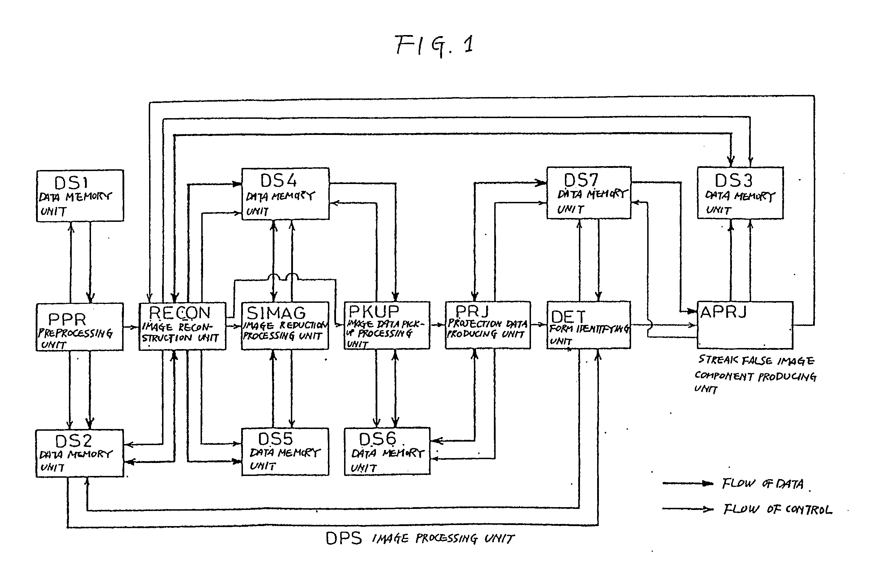

Fig.1 is a block diagram of an embodiment of the present invention. While explaining the apparatus, a method to reduce streak-like false images and the algorithm therefor are also explained. Among the lines binding individual units in the figure, broad lines depict data flow, and slender lines depict the flow of control. In the figure, DS1 is data memory unit to temporarily store raw X-ray data from actual measurement and feed the data to preprocessing unit PPR. On the raw X-ray data actually measured and transferred from data acquiring unit DAS (not shown in figures), the preprocessing unit PPR carries out a variety of processing such as offset correction, X-ray intensity correction, sensitivity correction of each channel in detector systems, logarithmic transform, correction of X-ray beam hardening and the like. The projection data of the output is stored in the data memory unit DS2.

RECON is image reconstruction unit carrying out image reconstruction processing on the projection

4

data preprocessed at preprocessing unit PPR and on the extracted projection data comprising streak components, hereinbelow described, which data is stored in data memory unit DS3, and the output thereof is stored in data memory units DS4 and DS5. In the data memory unit DS4 are stored data such as original images containing false images and the images from which false images are excluded, while in the data memory unit DS5 is stored the image data consisting of components of streak-like false images. As algorithm for image reconstruction, there can be mentioned 1. Fourier transformation, 2. filter-corrected inverse-projection method, 3. super-imposed integration method, 4. method of successive approximation, and the like, and correspondingly there may be a great number of constitutions of such units.

1. Fourier transform is an arithmetic operation principally based on high-speed Fourier transform (FFT) of a so-called discrete type, and is characterized by its capabilities of high-speed arithmetic processing and of employing the constitution principally based on a common apparatus ie. Fourier transform unit. Furthermore, there can be mentioned another Fourier transform concerning an algorithm and an apparatus therefor, which enable the increase in resolution by means of offset measurement and the reduction in various false images.

2. Filter-corrected inverse-projection method carries out inverse-projection processing in the real space after filter processing in the frequency space (convolution filtering). Most of operational X-ray CT systems are of the type of such processing method.

3. Superimposed integration method is a method to entirely carry out convolution (superimposed) filter arithmetic operation and inverse-projection arithmetic operation in the real space. The increase in the number of processed data requires a long time for convolution filter arithmetic operation, and therefore it is not so satisfactory as filter-corrected inverse-projection method in terms of processing time.

PKUP is image data pickup processing unit to extract objective two-dimensional image data from two-dimensional or three-dimensional image data under storage in data memory unit DS4, to carry out a variety of processing on them. The processed data is stored in data memory unit DS6. The contents of the processing are as follows;

1. In case of extraction of a region where the reduction of streaks are desirable, namely a region with less change in X-ray absorption coefficient distribution, for example in case that an original two-dimensional image is a basal image where lots of bones and soft tissues are present in mixture, there are extracted soft tissues and the like with less change in the absorption coefficient distribution.

2. Examining the consistency of regions except isolated data, extract one or plural closed regions. This means to extract adjacent data groups in consistency (closed region) in soft tissues with less change in the absorption coefficient distribution. For the extraction of closed regions, the size of a region (pixel numbers and area inside) may be considered.

3. The non-extracted part of the original image is valued at zero or at a constant.

4. An average of absorption coefficients is determined per region, and the average is reduced from all of the data values in the closed region. Or, values obtained from the arithmetically processed data of each closed region, or data values in circumference thereof, or the averaged values thereof or the arithmetically processed values thereof are reduced from the corresponding original data values each (The circumference of each closed region is defined 0 or a value close to 0). That is, level sift is carried out per closed region.

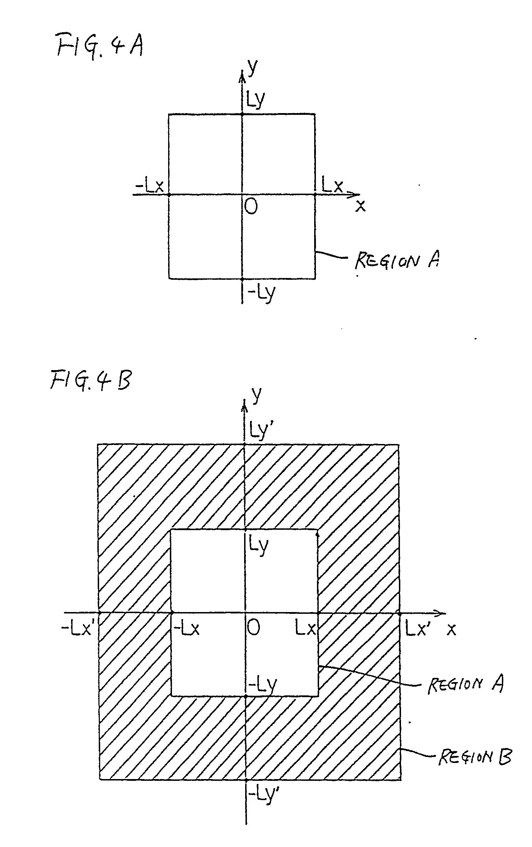

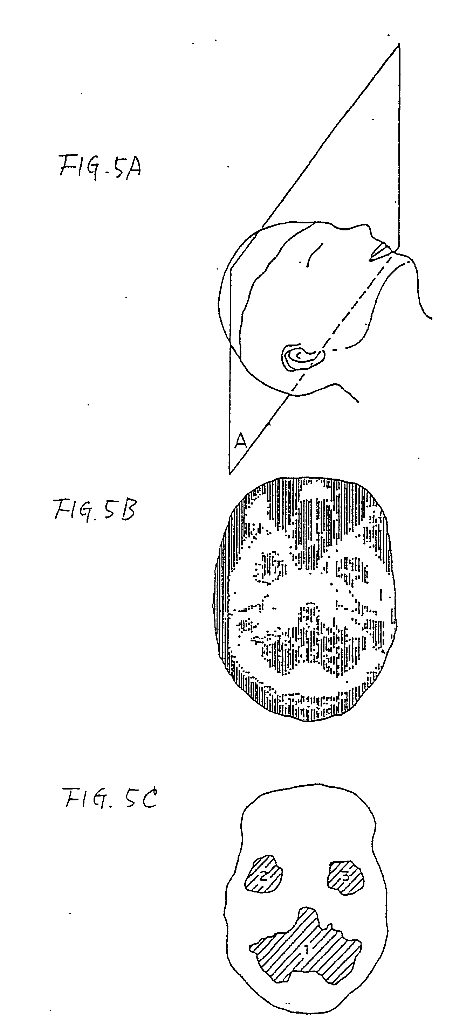

The production of projections based on the processing 1 to 4 is extremely important in terms of streak identification and its correction with high sensitivity and high efficacy, and exclusion and reduction of adverse effects of ringing and the like. Concrete examples of the data in a partial region to be extracted with image data pickup processing unit PKUP are shown in Figs. 5A to 5C. Fig.5A is a three-dimensional image of head; Fig.5B is a figure of a cross-sectional image on A plane from the three-dimensional image in Fig.5A ; Fig.5C is a figure of a partial image extracting soft tissue (regions 1, 2 and 3) in the image on cross section A. Image data pickup processing unit PKUP extracts the data in the regions 1, 2 and 3 in Fig.5C and generates data by designating the values of the other parts besides them as zero and adding them. This data is used as it is, or the extraction of closed regions (consistent regions) or the entire or partial processing such as level sift per region is carried out. The data obtained from the results of the processing insofar is a real data corresponding to region A in Fig.4A.

Projection data producing unit PRJ uses the data stored in data memory unit DS6 as input data, and based on the data it determines projection data a $(X, \theta)$ corresponding to each value of X represented in formula (0) per every direction differing by $\theta$. The projection data output is stored in data memory unit DS7. Projection calculation can be approximately divided into high-speed calculating method of projection by Fourier transform and direct calculating method of projection.

A. Calculation of projection by Fourier transformation

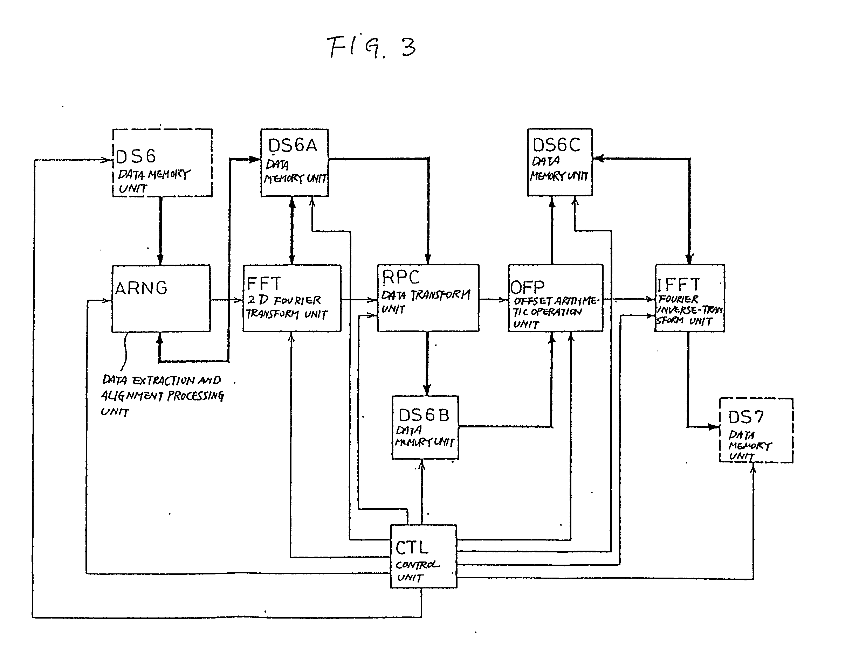

An embodiment of projection data producing unit PRJ for carrying out calculation of projection by Fourier transformation is shown in Fig.3. In the figure, ARNG is data extraction and alignment processing unit to extract processing image data from data memory unit DS6 containing image data, carrying out addition of data with value 0 as well as transform of data alignment for Fourier transform, and storing the processed data in data memory unit DS6A.

The data extracted by image data pickup processing unit PKUP is a real data corresponding to the region A in Fig.4A. According to Fourier transform, in order to increase the number of sample data, data corresponding to the region B in Fig.4B is produced by adding the data with value 0 to the outside of the region A to align the data in a data alignment desirable for Fourier transform. FFT is two-dimensional Fourier transform unit effecting two-dimensional Fourier transform shown in formula (9), on the two-dimensional image data in Fig.4B.

$$G(\xi,\eta) = \int\int_B \mu(x,y) \cdot e^{-J(\epsilon x + \eta y)} dx dy \qquad (9)$$

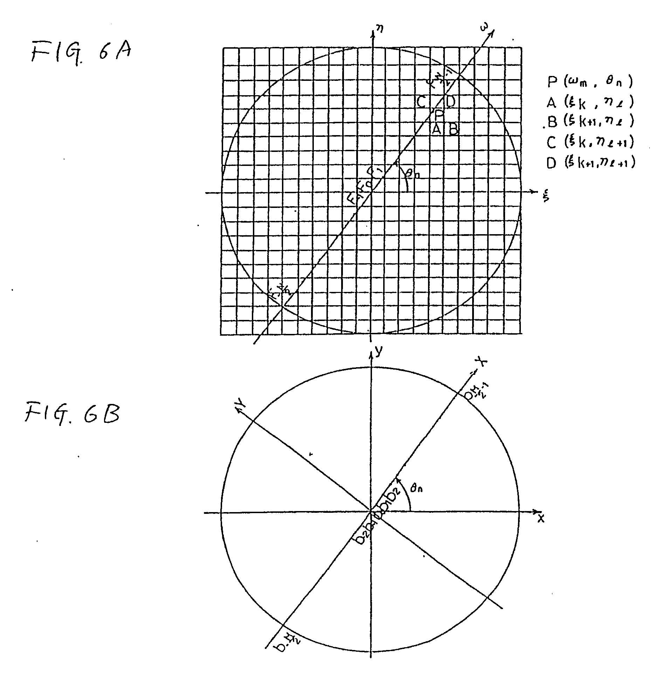

[wherein, $\mu(x,y)$ is the value of an image data at point $(x, y)$. Actual Fourier transform performs high-speed arithmetic operation as discrete two-dimensional Fourier transform (high-speed Fourier transform). Two-dimensional Fourier transform may carry out arithmetic operation as repetition of one-dimensional Fourier transform. By using the data stored in data memory unit DS6A as input data, two-dimensional Fourier transform unit FFT carries out Fourier transform on the data, and the results of Fourier transform as final results are stored again in data memory unit DS6A. The results of Fourier transform are projected on two-dimensional frequency plane $\xi\eta$ in Fig. 6A. In case that two-dimensional Fourier transform is carried out as repetition of one-dimensional Fourier transform, it is as in the following formula;

$$H(\xi, y) = \int_{-Lx}^{Lx'} \mu(x, y) \cdot e^{-J\epsilon x} dx \qquad \cdots (9-1)$$

$$G(\xi, \eta') = \int_{-Ly}^{Ly'} H(\xi, y) \cdot e^{-J\eta y} dy \qquad \cdots (9-2)$$

or

$$J(\eta, x) = \int_{-Ly}^{Ly'} \mu(x, y) \cdot e^{-J\eta y} dy \qquad \cdots (9-1)'$$

$$G(\xi, \eta) = \int_{-Lx}^{Lx'} J(\eta, x) \cdot e^{-J\epsilon x} dx \qquad \cdots (9-2)'$$

On the other hand, the results of Fourier transform of projection data are projected as the aggregation of the points on $\omega$ coordinate angularly spaced $\theta_n$ from $\xi$ axis in Fig. 6A. That is, the results of Fourier transform of projection data are projected as the aggregation of the points on $\omega\theta$ polar coordinate. In case that the coordinate system sifts by $x_0$ in x direction and $y_0$ in y direction from the normal coordinate system (including the case when pixel points sift from normal integers), the formula (9) is as follows;

$$G(\xi,\eta) = e^{-J(\epsilon x0 + \eta y0)} \cdot \int\int_B \mu(x,y) \cdot e^{-J(\epsilon x + \eta y)} dx dy \qquad (9)$$

RPC is the data transform unit between rectangular coordinate and polar coordinate, for determining the data of point $(\omega,\theta)$ from the calculation of the data on rectangular coordinate $\xi\eta$. RPC as the data transform unit between rectangular coordinate and polar coordinate processes the data stored in data memory unit DS6A, after Fourier transform by two-dimensional Fourier transform unit FFT. The data from the results of calculation is stored in data memory unit DS6B.

OFP is offset arithmetic operation processing unit to carry out offset arithmetic operation on receiving the data stored in data memory unit DS6B, in order to obtain the projection data corresponding to offset detection shown in Fig.2. The following arithmetic operation is effected on data $F(\omega,\theta)$ on polar coordinate $\omega\theta$ in the frequency plane, and the processed result $F(\omega,\theta)'$ is stored in data memory unit DS6C.

$$F(\omega,\theta)'$$
$$= Fr(\omega,\theta)' + j \cdot Fi(\omega,\theta)'$$
$$= F(\omega,\theta) \cdot e^{J\omega x0} \qquad (11)$$
$$Fr(\omega,\theta)'$$
$$= Fr(\omega,\theta) \cdot \cos(\omega X_0)$$

$-Fi(\omega,\theta) \cdot \sin(\omega X_0) \qquad \omega \geqq 0 \qquad (11\text{-}1)$

$Fi(\omega,\theta)'$

$= Fr(\omega,\theta) \cdot \sin(\omega X_0)$

$+ Fi(\omega,\theta) \cdot \cos(\omega X_0) \qquad \omega \geqq 0 \qquad (11\text{-}2)$

$Fr(-\omega, \theta)' = Fr(\omega, \theta)' \qquad \omega > 0 \qquad (11\text{-}3)$

$Fi(-\omega, \theta)' = -Fi(\omega, \theta)' \qquad \omega > 0 \qquad (11\text{-}4)$

$F(\omega, \theta)$ and $F(\omega, \theta)'$ are complex numbers; $Fr(\omega, \theta)$ and $Fr(\omega, \theta)'$ represent real parts while $Fi(\omega, \theta)$ and $Fi(\omega, \theta)'$ represent imaginary parts. $X_0$ is the offset quantity (unit is in length, for example in mm) by offset detection. The following equation is established on discrete data with sample interval d (unit is in length, for example in mm)

$$r$$
$$= \omega_m X_0 = (4\pi m / 2L_x') X_0$$
$$= \{4\pi m / (Nd)\} X_0 \qquad (11\text{-}5)$$

provided that

$m = 0, 1, 2, ..., N/2$

[wherein N is the sum of discrete frequency data (the sum of the number of discrete data on $\omega$ coordinate in Fig. 6A). The offset quantity $X_0$ is taken in the case of positive direction + of X axis. For 1/4 - 1/4 offset detection, $X_0 = -d/4$; from formula 11-5,

$r = -\pi m/N \ (m = 0, 1, ..., N/2)$

$r = -\pi/2 \ (m = N/2)$

Formula 11 is the formula giving $F(\omega, \theta)$ different phase variation per frequency component $\omega$. And the effect of the offset represented by formula 9' is in the relation to discrete data, similar to the relation as in the formula 11-5, and it is a corrected quantity obtained by substituting $X_0$ of formula 11-5 with the offset quantities $x_0$ and $y_0$ in x and y direction, respectively. Offset arithmetic processing unit OFP frequently carries out a variety of filter processing to modify frequency properties prior to or after the arithmetic operation of formulas 11, 11-1 and 11-4.

IFFT is Fourier inverse-transform unit for subjecting frequency component $F(\omega, \theta)'$ on line $\omega$ ($\theta = 0$) on polar coordinate $\omega\,\theta$ plane in Fig.6A to Fourier inverse-transform and determining projection data b (X, $\theta$) on XY in the real space in Fig. 6B, and carries out the following arithmetic operation on the input data delivered from data memory unit DS6C.

$$b \ (X, \theta) = C \cdot \{ \int_{-\infty}^{\infty} F \ (\omega, \theta)' \cdot e^{j\omega x} d\omega \}_r \qquad \cdots (12)$$

[wherein $\{ \ \}_r$ means the real part of the result of a Fourier inverse-transform and C is a proportional constant. The arithmetic results of Fourier inverse-transform unit IFFT are stored in data memory unit DS5. The projection calculation according to the Fourier transformation hereinabove mentioned carries out arithmetic operation with high speed following the process of so-called high-speed Fourier transform, as discrete Fourier transform on discrete data. CTL is control unit integrating and controlling integral control of the operations of individual units of projection data producing unit PRJ, data transfer control between each memory unit and each processing unit, data input into and output control from other outer units. In Fig.3, broad lines binding individual units represent data paths, while fine lines represent path of control signals.

B. Calculation of projection data by direct arithmetic operation

The above processing method is a method directly calculating projection according to formula 0. According to the method, the amount of calculation is not less, and its high-speed arithmetic operation is ascribed to the constitution of the units made of high-speed elements and the parallel arrangement of the units. Such calculation method has such flexibility that it is accurately applicable for fan beam as well as for parallel beam. In case that image data $\mu$ (x, y) is discrete data, the formula of producing projection data is

as follows.

$$a(X, \theta) \doteqdot \sum_{v} \mu(x_1, y_1) \cdot d Y_1$$
$$= \sum_{v} \mu(X \cdot \cos\theta - Y_1 \cdot \sin\theta,$$
$$X \cdot \sin\theta + Y_1 \cdot \cos\theta) \cdot d Y_1 \qquad \cdots (0)$$

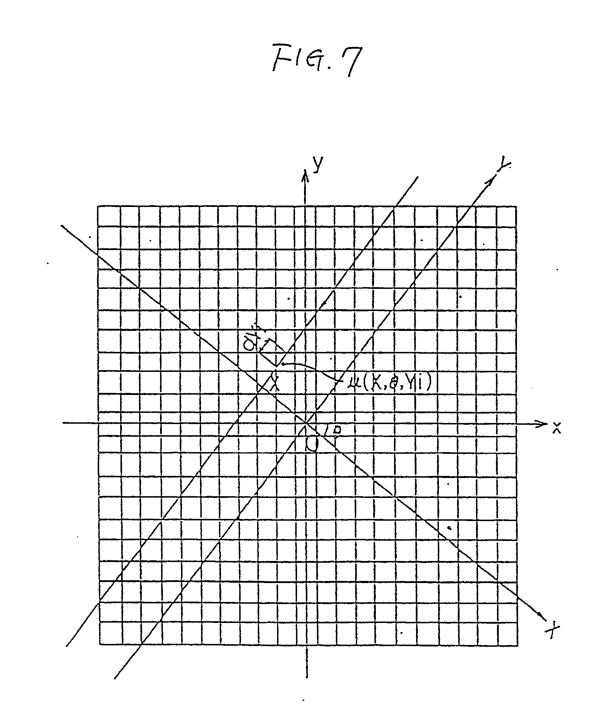

As one of such cases, on assuming $\mu(x, y)$ at an integer point (pixel) on xy coordinate as shown in the projection figure of Fig.7 by direct calculation process and providing a unit square with its center at such integer point, $\mu(x,y)$ supposedly has a constant value in the unit square. Projection a $(X, \theta$ in terms of each of the following

$\mu(x_1, y_1)$
$= \mu(X \cdot \cos\theta - Y_1 \cdot \sin\theta, X \cdot \sin\theta + Y_1 \cdot \cos\theta)$
$= \mu(X, \theta, Y_1)$

and the length of the line $dY_1$ can be calculated following formula 0' regarding all of the unit squares crossing line X=X on the line X=X on rectangular coordinate XY angularly spaced $\theta$ from X axis. The projection data calculation method due to direct arithmetic operation is not limited to the above method, and includes a method more complex with high precision (frequently involving the increase in the amount of calculation and the increase in processing time in such case). The calculation of projection data by Fourier transform is principally based on the calculation of projection data in parallel beam as described previously, but the calculation can be applicable to the calculation of projection data in fan beam. In this case, projection data in parallel beam in each direction is determined by Fourier transformation, and then projection data in fan beam in each direction is determined by linear transform and other transformation of the data set in parallel beam.

DET is form identifying unit (including form detecting unit; the same is applicable hereinafter.) to identify (including detecting; simply referred to as identify hereinafter) linear form, streak-like form and a form linearly synthesized (fan). An example of logical arithmetic operation to identify the presence of streak-like false images, carried out by the present unit, is as follows. The following arithmetic operation at $X=X_k$ is carried out on projection data a $(X, \theta)$ at distance X in $\theta$ direction and the length thereof L $(X, \theta)$.

$\{|p(X_k,\theta)-\bar{p}(X_k,\theta)| \geqq \delta\}$
$\cap \{|r(X_k,\theta)-r(X_k,\theta)'| \geqq \delta_m\}$     (13-1)

and

$\{r(X_k,\theta)-r(X_k,\theta)'\} \cdot \{p(X_k,\theta)-p(X_k,\theta)\} > 0$     (13-2)

wherein

$$p(X_k, \theta) = \frac{a(X_k, \theta)}{L(X_k, \theta)}$$
$$p(X_k, \theta) = \frac{1}{N}\sum_{i=1}^{N} p(X_{k-M+1}, \theta) \qquad k = 0, \pm 1, \pm 2, \cdots$$
$$n = 1, 2, \cdots, N$$
$$\cdots (13-3)$$

a $(X_k, \theta)$ is a projection data at $X_k$ in direction $\theta$ and L $(X_k, \theta)$ is the length of the projection. Therefore, p $(X_k, \theta)$ is the mean absorption coefficient at line $X=X_k$ in direction $\theta$, while $\bar{p}(X_k, \theta)$ is the mean of p $(X, \theta)$ in the vicinity of $X=X_k$ in direction $\theta$. In formula 13-3, N is the number of data in the vicinity and $\delta$, $\delta m$ are so-

called thresholds.

n, N, δ and δ m are normally constants, but they may be modified dynamically on conditions. If n = M + 1 and N = 2M + 1, $\bar{p}$ ($X_k$, θ) is the mean of M numbers before and after $X_k$ ie. 2M + 1 numbers in total.

On the other hand, r ($X_k$, θ) is the projection data measured actually (through preprocessing) at X = $X_k$ in direction θ and r ($X_k$, θ)' is the projection data facing r ($X_k$, θ) (having the same position but the direction being inverse). That is, in parallel beam, $r(X_k, \theta)' = r(-X_k, \theta + \pi)$.

Logical formulas 13-1 and 13-2' are the formulas taking account of the presence of streak-like false images at ($X_k$, θ) if the mean absorption coefficient on a line at distance $X_k$ in the direction θ of an extracted image has a larger change exceeding the threshold value (δ m) than the mean absorption coefficient on lines in the vicinity, and the measured projection data also has a change exceeding the threshold value (δ m) in the same direction; when the formulas 13-1 and 13-2 are not simultaneously satisfied, no presence of streak-like false image is considered. The method to identify streak following formulas 13-1 and 13-2 enables the automation of streak identification.

In case that the identification of streak-like false images is carried out by the assistance of human judgment, formula 13-2 is not required, but instead the following formula 13-1-1 can be used as identifying logical formula.

($p(X_k), \theta$), $\bar{p}(X_k), \theta$) are from formula 13-3.
$|p(X_k, \theta) - \bar{p}(X_k, \theta)| \geq \delta$     (13-1-1)

When the mean absorption coefficient on a line at distance $X_k$ in direction θ, thus extracted, has a larger change exceeding the threshold value (δ m) than the mean absorption coefficient on lines in the vicinity, the presence of streak-like false image is assumed. In a great number of cases, each closed region is a data set having close absorption coefficients, and if an appropriate form is selected, for example circle, the following is assumed to be established close at X = $X_k$.

$L(X, \theta) = L(X_k, \theta) = C_0$

$C_0$: constant

Hence, formulas 13-1 to 13-3 in this case

$\{|a(X_k, \theta) - \bar{a}(X_k, \theta)| \geq \delta'\}$
$\{|r(X_k, \theta) - r(X_k, \theta)'| \geq \delta_m\}$     (13-1-2)

and

$\{r(X_k, \theta) - r(X_k, \theta)'\} \cdot \{a(X_k, \theta) - \bar{a}(X_k, \theta)\} > 0$     (13-3-2)

$$\bar{a}(X_k, \theta) = \frac{1}{N} \sum_{i=1}^{N} a(X_{k-n+i}, \theta) \qquad k = 0, \pm 1, \pm 2, \cdots$$

$$n = 1, 2, \cdots, N$$

$$\cdots (13-3-2)$$

[wherein formulas 2-1-2 and 2-2-2 do not require the length of projection so that the calculation of the length of projection L (X, θ) is not necessary to carry out arithmetic operation with greater speed. In case that the length of projection is not required and the identification of streak is carried out by human judgment, formula 13-2 is not necessary so the formula 13-1-3 is employed as logical formula for identification. ($\bar{a}(X_k$, θ) is from formula 13-3-2.)

$|a(X_k, \theta) - \bar{a}(X_k, \theta)| \geq \delta'$     (13-1-3)

The results of identification carried out by form identifying unit DET are fed to streak false image component producing unit APRJ.

Streak false image component producing unit APRJ is a unit to produce false image components (projection data) of false images in lines, streaks and linearly synthesized forms, identified by form identifying unit DET.

As an example of extraction algorithm of streak false image components, projection data b $(X_k, \theta)$ at distance $X_k$ in direction $\theta$ is determined according to the following formula.

$$b(X_k, \theta) = C \cdot L(X_k, \theta) \cdot \{p(X_k, \theta) - \bar{p}(X_k, \theta)\} \qquad (14)$$

C is a constant; p $(X_k, \theta)$ and $\bar{p}$ $(X_k, \theta)$ follow the formula 13-3, while L $(X_k, \theta)$ and the like are the same as in the case of the form identifying unit DET. In case that no streak is detected, b $(X_k, \theta)$ = 0. As K $(X, \theta)$ can be regarded as being equal to L $(X_k, \theta)$ (by selecting an appropriate form) in many cases, formula 14 is as follows;

$$b(X_k, \theta) = C^- \cdot (a(X_k, \theta) - a(X_k, \theta)) \qquad (14)$$

$C^-$ is a constant and a $(X_k, \theta)$ is as shown in formula 13-3-2. Formula $14^-$ is not only used in the case that no consideration of the length of projection data is necessary, but the formula is also used for the sake of preventing adverse effects in the boundaries of regions. Principally based on formula 14 or $14^-$, the production of components of streak false images encompasses conditional changes. The false image components produced are stored in data memory unit DS3.

SIMAG is the unit producing image data from which streak is removed, by reducing per pixel an image only consisting of streak components under storage in data memory unit DS5, from the image (original image) containing streak and being stored in data memory unit SD4. The produced data is stored in the corresponding part of data memory unit DS4.

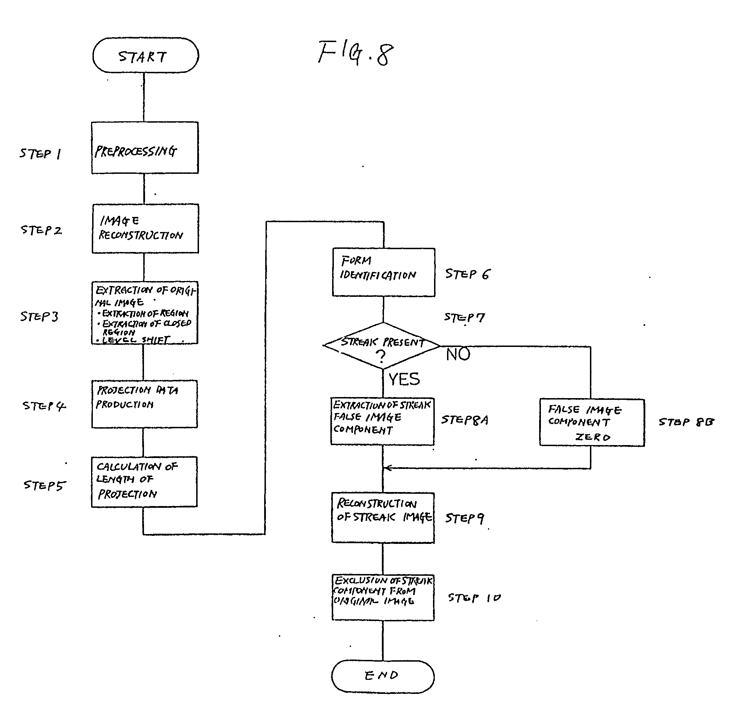

The operation of the example in such constitution is now explained in flow chart in Fig.8, wherein the scan is already in completion, and the X-ray data (raw data) in each direction, transmitted and measured through an object body, is to be stored in data memory unit DS1. Fig.8 shows the principle of the flow of process, so the parallel operation of the units and the parallel processing are not accurately depicted. The example is an example of reducing and processing streak, encompassing reconstruction of original images as well.

Measured X-ray data stored in data memory unit DS1 is extracted, which is preprocessed with offset correction, X-ray intensity correction, sensitivity correction of channels, logarithmic transform, correction of X-ray beam hardening and the like by data acquisition unit DAS (not shown in figure). The preprocessing is carried out at preprocessing unit PPR and the results are stored in data memory unit DS2. (Step 1).

Image reconstruction processing is performed on the data stored in data memory unit DS2 by image reconstruction unit RECON. The produced image (original image) is stored in data memory unit DS3 (Step 2).

The original image (corresponding two-dimensional image) under storage in data memory unit DS4 is extracted. Assuming that the image is a basal image in which bone and soft tissues are mixed (see Fig. 5B), there is extracted from the image soft tissue with less variations (smaller variations) in X-ray absorption coefficient distribution and being the region from which streak false images are reduced (Fig.5C). For further determining the consistency of the soft tissue, one or plural closed regions are extracted. Per closed region, the average of each closed region or the average of the circumference of each region is calculated, and such average is reduced from the original data of each of the closed regions (level sift per region). The value of the data of the non-extracted part of the original image is defined zero. These processes are performed on image data pickup processing unit PKUP, and the results are stored in data memory unit DS6 (the data herein is a real data corresponding to the region A in Fig.4A). (Step 3).

By using the data stored in data memory unit DS6 (actually the data corresponding to region B in Fig. 4B, which is obtained by adding the value zero to the outside of region A), projection data producing unit PRJ produces projection data in each direction and stores them in data memory unit DS7. In case that raw data is offset detected and measured, calculate the raw data as offset projection data (Step 4).

In Step 3, the values of all the data in each closed region extracted by image data pickup processing unit PKUP are defined zero, and from the real data where the values of the data of the non-extracted region are defined zero or from the data where the value zero is added to the outside of the real data region, projection data in each direction is produced by means of projection data producing unit PRJ and is stored in data memory unit DS7. Based on the calculation, the length of each projection is determined. In case that raw data is offset detected, the calculation is performed as in Step 4 (Step 5).

Form identifying unit DET performs the calculation following formula 13-3 and comparative calculations following formulas 13-1 and 13-2, concerning produced projection data a $(X_k, \theta)$, its length L $(X_k, \theta)$, the data in the vicinity of a $(X_k, \theta)$, and actually measured projection data r $(X_k, \theta)$ and the projection data r $(X_k, \theta)'$ facing it, to examine the presence of streak-like false images (Step 6). The presence of streak-like false image is checked (Step 7), and if a streak-like false image is identified, streak-like false image component producing unit APRJ performs the calculation following formula 14 or 14⁻, and the results are stored in data memory unit DS3 (Step 8A). If no streak-like false image is present, the value zero is stored in data memory unit DS3 (Step 8B). This process is repeated at all positions and in all directions.

By using streak-like false image component data stored in data memory unit DS3, as input projection data, the image consisting of streak-like false images alone are reconstructed by image reconstruction unit RECON and is stored in data memory unit DS5 (Step 9). Image reduction processing unit SIMAG reads out the original image stored in data memory unit DS4, reduces the streak false images being stored in data memory unit DS5, and stores, in data memory unit DS4, the image from which is excluded streak (Step 10). The present unit thus identifies streak and produces an image excluding the streak.

The present invention is not limited to the above example, but the following application examples and other examples are considered.

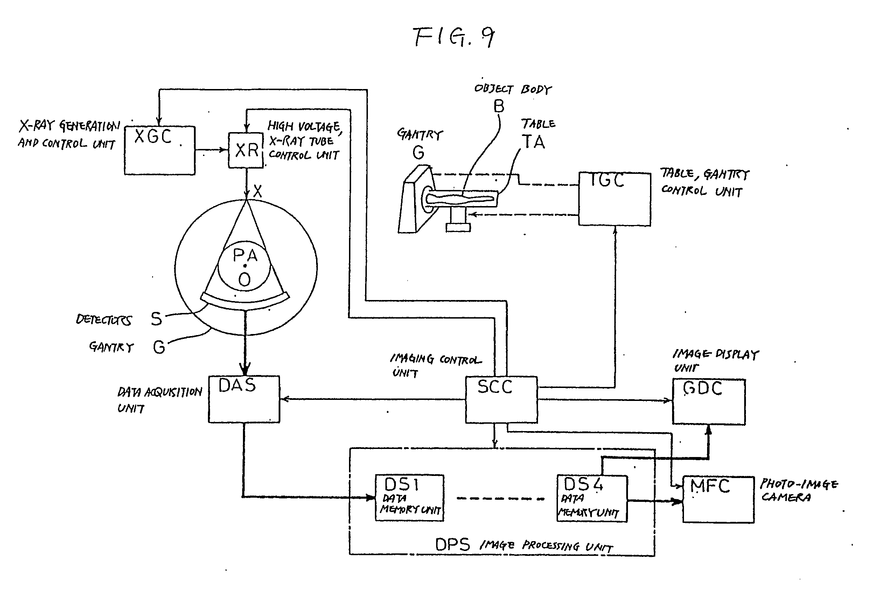

1. Fig.9 is a block diagram of X-ray CT realizing the direct online reduction of streak false image by connecting an X-ray CT system to image processing unit DPS of the present example. X-ray CT system carries out positioning of tomographic imaging unit by controlling gantry G and table TA by means of table gantry system GC, and scans reconstructive region PA by generating X ray on supplying high voltage by means of controlling X-ray generation control unit XGC while X-ray tube controlling unit XR supplies high voltage to X-ray tube X. Detectors group S detects X-ray data transmitted and transfers the data to data acquisition unit DAS. Data acquisition unit DAS amplifies and integrates data, and after carrying out processing of the data such as AD transform (analog-digital transform), the unit transfers the data to image processing unit DPS and writes down the data in data memory unit DS1. The operation hereinafter is as described previously. The image data being stored in data memory unit DS4 and from which streak is excluded is transferred to image display unit GDC and photo-image camera MFC if necessary. Photographic control unit SCC controls operations of individual units.

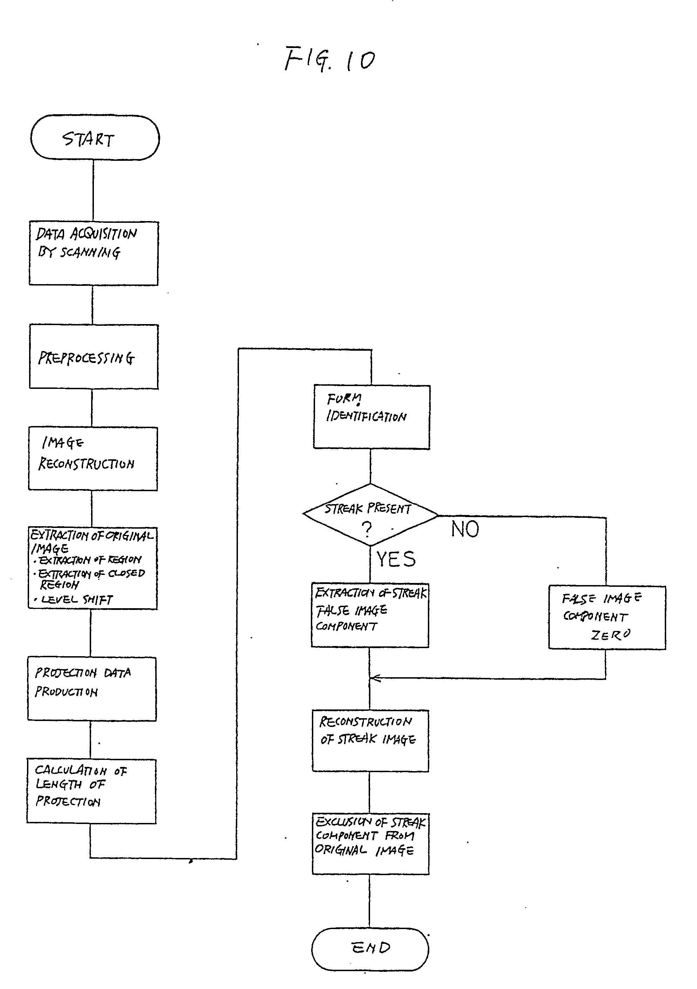

Fig.10 is a flow chart of the operation of the above-mentioned application example. The X-ray data detected by detectors group S through scanning is collected in data acquisition unit DAS, which then carries out processing including amplification, integration and AD transform. Such processing is performed in all directions to obtain scan data in all directions. As the operation hereinafter is the same as in the flow chart in Fig.8, its explanation will not be given.

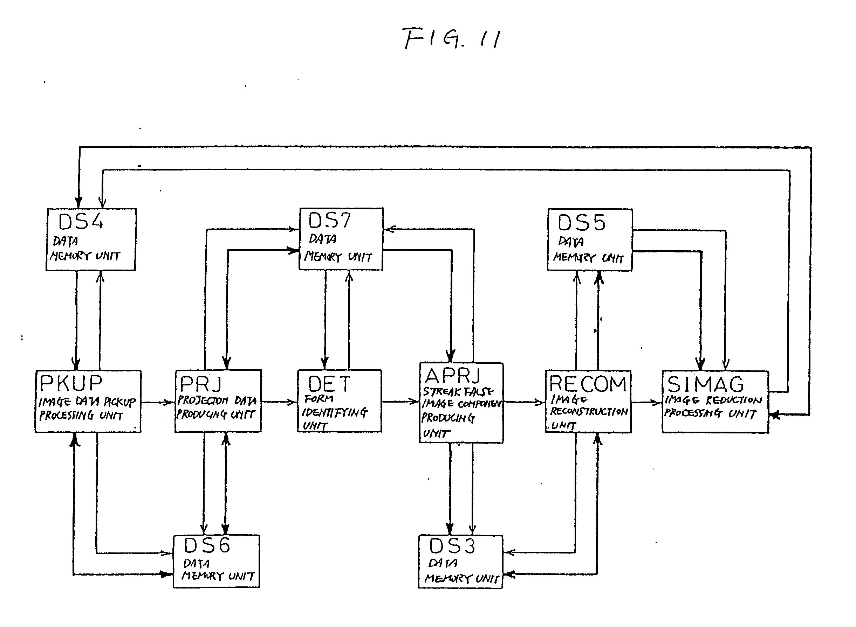

2. Fig.11 is another application example and is a block diagram of image processing unit capable of reducing streaks. The unit extracts optionally two-dimensional cross section from reconstructed images (two-dimensional or three-dimensional) of X-ray CT and the like, and reduces streak from the cross section. The unit is different from the unit in the example of Fig.1 as follows.

A. The unit does not require units related to actually measured raw data, so that neither preprocessing unit PPR nor actually measured X-ray raw data memory unit DS1 nor data memory unit DS2 is contained therein and that the unit has a simple structure with less buss or signal line or the like.

B. Image reconstruction unit RECON reconstructs only the image of streak false image component.

Other individual normalization processes are identical.

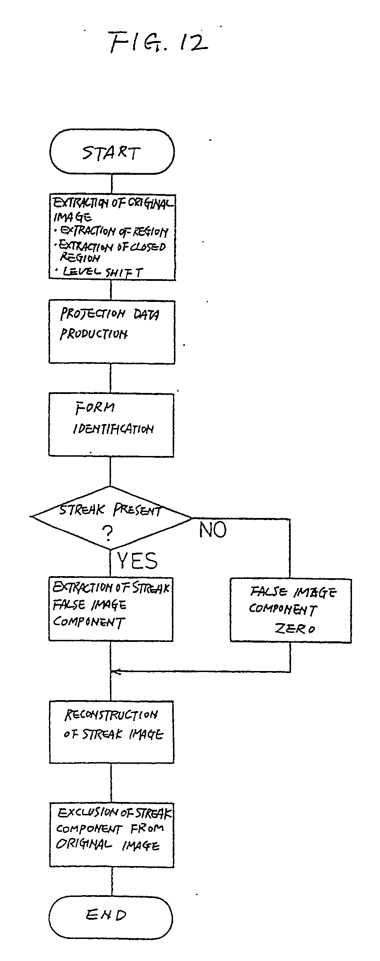

The example is the case in which identification of streak is carried out by human judgment and simpler constitution never requires calculation of the length of a projection, which realizes processing with a higher speed. In this case, the justification as to whether or not streak-like false image is reduced by form identifying unit DET is carried out on formula 13-1-3, while the production of false images in streaks by a unit of producing streak false image components is according to formula 14⁻. As the flow chart of operation of the unit is as shown in Fig.12, its explanation is not given here because other flows are identical except the reduction of preprocessing process, image reconstruction process and the process of calculation of the length of projection.

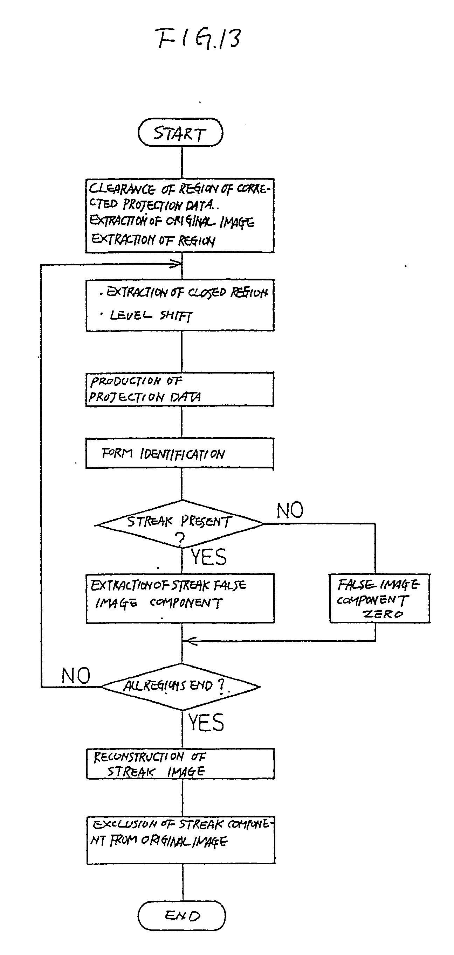

3. The present case is an example which extracts regions one by one and carries out identification and correction of streaks in the regions, as the unit with simpler constitution in Fig.11. The operation is shown in the flow chart in Fig.13. In the process, the processing time is long but more accurate reduction of streak from an image is capable. As the operation of the unit is the same as shown in Fig.12 except the points of the extraction of individual regions one by one and streak identification and reduction per extracted region, its explanation is not given here. A large number of other modifications can be available.

1. Example of modifying algorithm

A. Formulas 13-1 and 13-2 are extremely effective for identification of streak-like false images, whereas formulas 14 and 14⁻ are greatly effective for reduction of false images. The length of projection is not required, provided that each of closed regions is a data set each having relatively close absorption coefficients and an appropriate form can be selected, so formulas 13-1-2, 13-2-2 and 14⁻ are generally sufficient, and the calculation time can be reduced thus. When human assistance can be available for the justification of streak-like false image, actually measured projection data to be stored in data identification unit DS2 is not necessary for the identification of streak-like false images. Therefore, the formula 13-1-1 or 13-1-3 alone may be satisfactory as the algorithm.

B. The algorithm to carry out the judgment of streak in more assuring manner by using actually measured projection data is not limited to the combination of formulas 13-1 and 13-2 or of formulas 13-1-2 and 13-2-2, but various modifications can be considered. For example, not only the data $r(X_k, \theta)'$ facing $r(X_k, \theta)$ but also the estimates of the data in the vicinity of $r(X_k, \theta)'$ are used. Further, there is illustrated the case in which one or more view data not only in direction $\theta + \pi$ but also in the vicinity thereof are used.

C. $p(X_k, S)$ in formulas 13-1, 13-2 and 14 and $\bar{a}(X_k, \theta)$ in formulas 13-1-2, 13-2-2, 13-1-3 and 14⁻ may be not only an average of data in a substantially narrower range but also constant or an average in the entire range or in a wider range. N, n, $\delta$, $\delta'$, $\delta_m$ and the like are appropriate constants and may dynamically be selected at calculation depending on conditions.

D. $\bar{p}(X_k, \theta)$, $\bar{a}(X_k, \theta)$ and the like may not be an average of data in vicinity, but another estimates calculated from data in vicinity, an average of the maximum and the minimum of data in vicinity and other estimates of calculation.

E. In the logical formula of form identification, thresholds may be changeable depending on the symbol of the comparative results.

That is,

if $p(X_k,\theta) \geq \bar{p}(X_k,\theta)$

in formulas 13-1 and 13-1-1,

instead of $|p(X_k,\theta) - \bar{p}(X_k,\theta)| \geq \delta$

the formula $p(X_k,\theta) - \bar{p}(Xk,\theta) \geq \delta_1$

may be established.

if

$$p(X_k,\theta) < \bar{p}X_k,\theta),$$

the following

$$\bar{p}(X_k,\theta) - p(X_k,\theta) \geq \delta_2$$

may be appropriate enough.

The same is applicable to

$$|r(X_k,\theta) - r(X_k,\theta)'| \geq \delta_m,$$
$$|a(X_k,\theta) - \bar{a}(X_k,\theta)| \geq \delta'$$

F. In order to extract an objective two-dimensional image from a multi-dimensional image to further extract a specific region of the two-dimensional image, it is needless to say that a part of positional, spatial specification of an extracting part, and specification by the values of an image data of an extracting part or the combination thereof may be used. As an example of specification by the values of an image data of an extracting part, there can be mentioned a data set in a certain range (one data set in the range from lower and upper limits and a data set in plural ranges each from lower and upper limits.)

G. The identification of a streak-like false image is carried out on the data of an extracted partial region (for example soft tissue), and streak reduction may be carried out on an extracted partial region (the soft tissue) or on the entire region.

H. A great number of modifications can be allowed for logical arithmetics for identifying streak-like false images reflecting actually measured projection data. For example, for the formulas;

$$s\ (X_K\ ,\ \theta) = r\ (X_K\ ,\ \theta) - r\ (X_K\ ,\ \theta)\ '$$

$$\bar{s}\ (X_K\ ,\ \theta) = \frac{1}{M}\sum_{l=1}^{M} s\ (X_{K-m+l}\ ,\ \theta) \qquad k=0,\ \pm 1,\ \pm 2,\ \cdots$$

$$m=1,\ 2,\ \cdots,\ M$$

$$\cdots\ (1\ 3-3-4)$$

being substituted with $s(X_k, \theta)$ and $\bar{s}(X_k, \theta)$ for $r(X_k, \theta)$ and $r(X_k, \theta)'$, the formulas corresponding to 13-1 and 13-2, are as follows;

$$\{|p(X_k,\theta)-\bar{p}(X_k,\theta)|\geqq\delta\}$$
$$\cap\{|s(X_k,\theta)-\bar{s}(X_k,\theta)|\geqq\delta_m'\} \qquad (13\text{-}1\text{-}4)$$

and

$$\{p(X_k,\theta)-\bar{p}(X_k,\theta)\}\cdot\{s(X_k,\theta)-\bar{s}(X_k,\theta)\}>0 \qquad (13\text{-}2\text{-}4)$$

Those formulas corresponding to 13-1-2 and 13-2-2 are as follows;

$$\{|a(X_k,\theta)-\bar{a}(X_k,\theta)|\geqq\delta'\}$$
$$\cap\{|s(X_k,\theta)-\bar{s}(X_k,\theta)|\geqq\delta_m'\} \qquad (13\text{-}1\text{-}5)$$

and

$$\{a(X_k,\theta)-\bar{a}(X_k,\theta)\}\cdot\{s(X_k,\theta)-\bar{s}(X_k,\theta)\}>0 \qquad (13\text{-}2\text{-}5)$$

[wherein m, M and $\delta_m'$ are normally constants, but they are variable dynamically depending on conditions].

2. Modifying examples of units

A. Division, integration and addition of data memory unit

a. Those units comprising one data memory unit divided plurally. For example, data memory units DS2 and DS3 are individually divided plurally into the memory of storing projection data and the memory for image reconstruction unit RECON.

b. Data memory unit in hierarchical constitution for taking account of speed and economy.

c. Data memory unit in integrated constitution.

For example, one memory unit integrating data memory units DS4 and DS5 as image memory.

d. Data memory unit comprising appropriately added buffer memory, cash memory and the like appropriately added.

B. Division, integration and series of unit

a. Those in which individual units are functionally separated and constituted. For example, those in which projection data producing unit PRJ is divided into Fourier transform unit, rectangular coordinate-polar coordinate transform unit, Fourier inverse-transform unit and the like, and of the constitution provided with parallel processability.

b. Those integrally constituted with plural units. For example, by constituting projection data producing unit PRJ and image reconstruction unit RECON principally comprising Fourier transform unit, thereby integrally constituting Fourier transform units together, Fourier inverse-transform units together, a Fourier transform unit and a Fourier inverse-transform unit together, and a transform unit from polar-coordinate to rectangular-coordinate and one from rectangular-coordinate to polar coordinate together, constitute plural units in integrated constitution or in an identical unit (in the latter case, the unit is used in time-divisional manner on objectives). Further, those in integrated constitution comprising form-identifying unit DET, streak false image component producing unit APRJ; image data pickup unit PKUP and projection data producing unit PRJ and the like.

c. Those intended for multiple alignment of units.

d. Integrated control unit comprising microprocessor, microprogram memory, decorder and the like.

C. Addition of units

a. Addition of large-volume memory unit including magnetic disk and the like.

b. Addition of outer memory unit including magnetic tape unit MT, floppy disk unit FDD and the like.

c. Addition of dedicated operator console, CRT, dedicated pattern display unit, dedicated examination apparatus and the like.

d. Addition of graphic display unit and the like.

e. Addition of image display unit equipped with information input unit, man-machine interface unit equipped with image display unit. Addition of the entire part or a part of a unit which, while displaying a three-dimensional data on an image display unit, can display an extracting two-dimensional data plane on the identical display or on another display unit to select and designate an extracting plane and can further select another extracting region while displaying the extracted two-dimensional plane. Or, addition of a unit comprising image display unit displaying image, parameter readout and display unit of an extracted region (or parameter readout unit), parameter input unit of extracted regions and the like.

D. Various modifications are possible in case that projection data producing unit PRJ is realized as high-speed projection arithmetic unit by Fourier transformation.

E. Various modifications are possible in case that image reconstruction unit PRJ is realized as image reconstruction unit of Fourier transform type.

F. Division and integration of buss, control line, signal line and the like.

G. Those employing a common computer processing unit CPU, dedicated array processor AP and the like.

H. Those realizing the same calculation processing in another constitution (for example, units such as CU, AP and the like, soft wear, firmwear).

According to the present invention, as has been explained above, the following effects are obtained as described hereinafter.

1. Owing to simple identification of streak and exclusion of algorithm, false images in lines, streaks and forms synthesized lineally (fan form and the like), are clearly identified and can be extremely effectively decreased.

2. The identification and reduction of streak can be done with high sensitivity. The above-mentioned 1 and 2 are the effects produced by the principle of the present process exactly recognizing the process of producing false images. The projection calculated by high-speed Fourier transform in particular allows high-speed processing but is accurate, and gives sufficient effects on the identification and reduction of streak.

3. There are no or extremely low adverse effects. This is the effect brought about by the partial extraction of images, generation of closed regions, calculation of relative projection by level sift and the like. Furthermore, by effectively using projections measured by formulas 13-1 and 13-2, or 13-1-2 and 13-2-2, and the like, streak can be reduced exactly following physical phenomena, without the sacrifice of resolution to be generally generated at ease.

4. This process is greatly effective for streak-like false images to be generated from the inevitable phenomenon of X-ray CT, ie. partial volume effect, and is also very effective for streak-like false images generated from various causes such as areasing (folding) because of X-ray beam hardening, biological metals and movement and the finiteness of sample rates in measurement systems.

5. It is expected that the automatic recognition process of the identification and reduction of streak-like images can be highly realized. This is the effect of the effective utilization of measured projections (detection exactly following physical phenomenon).

6. Owing to the principal constitution of high-speed Fourier transform and the employment of the simple algorithm of the present invention, there can be achieved the reduction processing of streak-like false images with remarkably high speed.

7. Simple structure by common arithmetic processing unit principally comprising Fourier arithmetic unit can be achieved to realize an economical unit.

8. The organic judgment and reduction of streak false images, mixed with the advantages of automatic recognition of streak by the unit of the present invention, the identification and recognition of steak by human judgment, and the subsequent detection and correction of streak by the present unit.

9. The reducing effects of streak are natural, and the effects on the improvement of image quality and improvement of standard deviation of images are great.

10. The method of processing is very flexible such that the identification of streak-like false images is carried out on soft tissues and streak reduction is carried out on the entire region or in soft tissues.

**Claims**

1. An image processing method to identify from an image the presence of a streak false image in streaks, lines and fan forms synthesized lineally and to reduce streak and the like in order to reduce such false image, comprising extracting a part or the entire part of a two-dimensional image, determining projection data in each direction or in an appropriate direction by calculation, identifying a streak-like false image on the comparison of the projection data and producing the data to exclude the streak-like false image based on the comparative results.

2. The image processing method to reduce streak and the like according to claim 1, wherein the extraction of a two-dimensional image is for the entire part or a part of the corresponding two-dimensional plane.

3. The image processing method to reduce streak and the like according to claim 1, wherein the extraction of a two-dimensional image employs at least one image of closed regions as spatial regions in consistency with relatively small variations in image values or open regions as spatial regions in inconsistency.

4. The image processing method to reduce streak and the like according to claim 1, 2 or 3, wherein the values of non-extracted regions are defined zero, a constant or blank in the extraction of a two-dimensional image.

5. The image processing method to reduce streak and the like according to claim 1, wherein the production of projection data is carried out following Fourier transformation.

6. The image processing method to reduce streak and the like according to claim 1, wherein the production of projection data is carried out following direct calculating method of projection.

7. The image processing method to reduce streak and the like according to claim 1, comprising determining projection data as a data set of the form in conformity with the form of scan data of measured projection data, such as a data set of parallel beam projections each being parallel or a data set of fan beam projections extending in fan form.

8. The image processing method to reduce streak and the like according to claim 1, wherein projection data is produced by sifting the position thereof offset.

9. The image processing method to reduce streak and the like according to claim 1, wherein the identification of a streak-like false image is carried out on comparison between a projection data at an optional position in an optional direction and the average of a projection data set adjacent thereto or a projection data set in a wider range or the value obtained arithmetically from the data sets, or a constant.

10. The image processing method to reduce streak and the like according to claim 1, wherein the identification of a streak-like false image is carried out on comparison between projection data at an optional position in an optional direction and the average of a projection data set adjacent thereto or a projection data set in a different direction, or the value obtained arithmetically from the data sets, or a constant.

11. The image processing method to reduce streak and the like according to claim 1, comprising producing projection components to exclude a streak-like false image following the condition of identifying a streak-like false image, carrying out image reconstruction by using them thereby obtaining a streak image for correction, and reducing the data of the streak image from the corresponding data of an original image whereby streak is excluded.

12. The image processing method to reduce streak and the like according to claim 11, wherein the projection data to exclude streak-like false image is designated as data of a value proportional to a value which is obtained by reducing from the projection data at a given position in a given direction the average of a projection data adjacent thereto or a projection data set in a wider range, or a value arithmetically obtained from the data sets or a constant.

13. The image processing method to reduce streak and the like according to claim 11, wherein the projection data to exclude streak-like false image is designated as data of a value proportional to a value which is obtained by reducing from the projection data at a given position in a given direction the average of a projection data set adjacent thereto or a projection data set in a different direction, or a value arithmetically obtained from the data sets.

14. An image processing apparatus to reduce streak and the like comprising
an image data pickup processing means to extract and process the entire part or a part of an objective original image data in two-dimensional space;
a projection data producing means to produce corresponding projection data or the length of a projection at each position or an optional position per each direction or an optional direction by carrying out arithmetic operation on input data;
a form identifying means to identify a streak-like false image by form identifying arithmetic operation based on the projection data or projection data per unit length corresponding to said projection data divided by the projection length thereof;
a streak false image producing means to produce a streak false image from the projection data or the projection data per unit length based on the arithmetic results by said form identifying means;
an image reconstruction means to obtain streak image data for correction by carrying out image reconstruction of projection components from which streak false images are excluded;
an image reduction processing means to obtain an image data without streak false images by reducing the image data consisting of streak-like image alone from the original image data containing streak-like false images; and
at least one of data memory units.

15. The image processing apparatus to reduce streak and the like according to claim 14, wherein the image data pickup processing means extracts and processes the entire part or a part of objective original image data in two-dimensional space from the image data in the multi-dimensional space and designates the value of non-extracted regions as zero or a constant and uses as it is or carries out the entire or a part of processing such as the extraction processing of closed regions (consistent regions) or open regions (inconsistent regions), the calculation or extraction of the amount of level sift per region and level sift processing per region.

16. The image processing apparatus to reduce streak and the like according to claim 14, wherein the projection data producing means is in the constitution comprising
a data extraction and alignment processing means to carry out addition of data with a value zero and data alignment and transformation,
a two-dimensional Fourier transform means to perform two-dimensional Fourier transform on two-dimensional data,
a transform means from data on rectangular coordinate to data on polar coordinate to arithmetically determine data of a point on polar coordinate from the data on rectangular coordinate,
an offset arithmetic operation processing means to carry out offset arithmetic operation to obtain projection data corresponding to offset detection,
the entire part or a part of a Fourier inverse-transform means to determine projection data in the real space by subjecting the frequency component on a line on polar coordinate to Fourier inverse-transform, and
at least one data memory means.

17. The image processing unit to reduce streak and the like according to claim 14, wherein the projection data producing means is equipped with an arithmetic means to directly calculate projection data.

# FIG. 1

EP 0 440 797 A1

DPS *IMAGE PROCESSING UNIT*

Blocks:
- DS1 DATA MEMORY UNIT
- DS4 DATA MEMORY UNIT
- DS7 DATA MEMORY UNIT
- DS3 DATA MEMORY UNIT
- PPR PREPROCESSING UNIT
- RECON IMAGE RECONSTRUCTION UNIT
- SIMAG IMAGE REDUCTION PROCESSING UNIT
- PKUP IMAGE DATA PICK-UP PROCESSING UNIT
- PRJ PROJECTION DATA PRODUCING UNIT
- DET FORM IDENTIFYING UNIT
- APRJ STREAK FALSE IMAGE COMPONENT PRODUCING UNIT
- DS2 DATA MEMORY UNIT
- DS5 DATA MEMORY UNIT
- DS6 DATA MEMORY UNIT

Legend:
- ———▶ FLOW OF DATA
- ———▷ FLOW OF CONTROL

# FIG. 2

FIG. 3

DS6
DATA MEMORY
UNIT

DS6A
DATA
MEMORY UNIT

DS6C
DATA
MEMORY UNIT

ARNG

DATA EXTRACTION AND
ALIGNMENT PROCESSING
UNIT

FFT
2D FOURIER
TRANSFORM UNIT

RPC
DATA TRANSFORM
UNIT

OFP
OFFSET ARITHME-
TIC OPERATION
UNIT

IFFT
FOURIER
INVERSE-TRAN
SFORM UNIT

DS6B
DATA
MEMORY UNIT

DS7
DATA
MEMORY
UNIT

CTL
CONTROL
UNIT

EP 0 440 797 A1

FIG. 4 A

FIG. 4 B

FIG.5A

FIG.5B

FIG.5C

FIG. 6A

FIG. 6B

P $(\omega_m, \theta_n)$
A $(\xi_k, \eta_\ell)$
B $(\xi_{k+1}, \eta_\ell)$
C $(\xi_k, \eta_{\ell+1})$
D $(\xi_{k+1}, \eta_{\ell+1})$

# FIG. 7

FIG.8

START

STEP 1 — PREPROCESSING

STEP 2 — IMAGE RECONSTRUCTION

STEP 3 — EXTRACTION OF ORIGINAL IMAGE
- EXTRACTION OF REGION
- EXTRACTION OF CLOSED REGION
- LEVEL SHIFT

STEP 4 — PROJECTION DATA PRODUCTION

STEP 5 — CALCULATION OF LENGTH OF PROJECTION

STEP 6 — FORM IDENTIFICATION

STEP 7 — STREAK PRESENT ?
NO
YES

STEP 8A — EXTRACTION OF STREAK FALSE IMAGE COMPONENT

STEP 8B — FALSE IMAGE COMPONENT ZERO

STEP 9 — RECONSTRUCTION OF STREAK IMAGE

STEP 10 — EXCLUSION OF STREAK COMPONENT FROM ORIGINAL IMAGE

END

FIG. 9

FIG. 10

START

DATA ACQUISITION
BY SCANNING

PREPROCESSING

IMAGE
RECONSTRUCTION

EXTRACTION OF ORIGINAL
IMAGE
· EXTRACTION OF REGION
· EXTRACTION OF CLOSED
  REGION
· LEVEL SHIFT

PROJECTION DATA
PRODUCTION

CALCULATION OF
LENGTH OF
PROJECTION

FORM
IDENTIFICATION

STREAK PRESENT
?

NO

YES

EXTRACTION OF STREAK
FALSE IMAGE
COMPONENT

FALSE IMAGE
COMPONENT
ZERO

RECONSTRUCTION
OF STREAK IMAGE

EXCLUSION OF STREAK
COMPONENT FROM
ORIGINAL IMAGE

END

FIG. 11

# FIG. 12

```
        ┌──────────────┐
        │    START     │
        └──────┬───────┘
               │
    ┌──────────┴──────────┐
    │ EXTRACTION OF ORIGINAL
    │ IMAGE
    │ · EXTRACTION OF REGION
    │ · EXTRACTION OF CLOSED
    │   REGION
    │ · LEVEL SHIFT        │
    └──────────┬──────────┘
               │
    ┌──────────┴──────────┐
    │ PROJECTION DATA      │
    │ PRODUCTION           │
    └──────────┬──────────┘
               │
    ┌──────────┴──────────┐
    │ FORM                 │
    │ IDENTIFICATION       │
    └──────────┬──────────┘
               │
          ◇ STREAK PRESENT ◇ ──NO──┐
          │       ?        │        │
           YES                      │
    ┌──────────┴──────────┐   ┌─────┴───────┐
    │ EXTRACTION OF STREAK │   │ FALSE IMAGE │
    │ FALSE IMAGE          │   │ COMPONENT   │
    │ COMPONENT            │   │ ZERO        │
    └──────────┬──────────┘   └─────┬───────┘
               │◄───────────────────┘
               │
    ┌──────────┴──────────┐
    │ RECONSTRUCTION       │
    │ OF STREAK IMAGE      │
    └──────────┬──────────┘
               │
    ┌──────────┴──────────┐
    │ EXCLUSION OF STREAK  │
    │ COMPONENT FROM       │
    │ ORIGINAL IMAGE       │
    └──────────┬──────────┘
               │
        ┌──────┴───────┐
        │     END      │
        └──────────────┘
```

# FIG.13

START

CLEARANCE OF REGION OF CORRE-
CTED PROJECTION DATA.
EXTRACTION OF ORIGINAL IMAGE
EXTRACTION OF REGION

· EXTRACTION OF CLOSED REGION
· LEVEL SHIFT

PRODUCTION OF
PROJECTION DATA

FORM IDENTIFICATION

STREAK PRESENT ? — NO

YES

EXTRACTION OF STREAK FALSE
IMAGE COMPONENT

FALSE IMAGE
COMPONENT
ZERO

NO — ALL REGIONS END ?

YES

RECONSTRUCTION OF
STREAK IMAGE

EXCLUSION OF STREAK COMPONE-
NT FROM ORIGINAL IMAGE

END

# INTERNATIONAL SEARCH REPORT

International Application No PCT/JP89/01129

**I. CLASSIFICATION OF SUBJECT MATTER** (if several classification symbols apply, indicate all) 6

According to International Patent Classification (IPC) or to both National Classification and IPC

Int. Cl$^5$   A61B6/03

**II. FIELDS SEARCHED**

| Minimum Documentation Searched 7 | |
|---|---|
| Classification System | Classification Symbols |
| IPC | A61B6/03 |

Documentation Searched other than Minimum Documentation
to the Extent that such Documents are Included in the Fields Searched 8

| | |
|---|---|
| Jitsuyo Shinan Koho | 1971 - 1989 |
| Kokai Jitsuyo Shinan Koho | 1971 - 1989 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | JP, A, 60-199433 (Yokogawa Medical Systems, Ltd.), 8 October 1985 (08. 10. 85), Pages 1, 2, left column, line 31, (Family: none) | 1 - 17 |
| A | JP, A, 60-137351 (Elscint, Ltd.), 20 July 1985 (20. 07. 85), Claim, (Family: none) | 1 - 17 |
| A | JP, A, 60-41170 (Elscint, Ltd.), 4 March 1985 (04. 03. 85), Pages 1 to 3, & US, A, 4616318 & FR, A1, 2547439 & DE, A1, 3420576 | 1 - 17 |

* Special categories of cited documents: 16

"A" document defining the general state of the art which is not considered to be of particular relevance

"E" earlier document but published on or after the International filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 8, 1990 (08. 01. 90) | January 22, 1990 (22. 01. 90) |
| International Searching Authority | Signature of Authorized Officer |
| Japanese Patent Office | |

Form PCT/ISA/210 (second sheet) (January 1985)